# EUROPEAN PATENT SPECIFICATION

(11) **EP 4 026 790 B1**
(45) Date of publication and mention of the grant of the patent: **06.09.2023**
(21) Application number: 22151227.0
(22) Date of filing: 12.01.2022
(51) Int. Cl.: B65D 88/14, B64D 9/00

(54) **CARGO CONTAINER AND CARGO CONTAINER ASSEMBLY COMPRISING SUCH A CARGO CONTAINER AND METHOD OF STOWING CARGO IN A CARGO CONTAINER ASSEMBLY**
FRACHTBEHÄLTER UND FRACHTBEHÄLTERANORDNUNG MIT EINEM SOLCHEN FRACHTBEHÄLTER UND VERFAHREN ZUM VERSTAUEN VON FRACHT IN EINER FRACHTBEHÄLTERANORDNUNG
CONTENEUR DE FRET ET ENSEMBLE CONTENEUR DE FRET COMPRENANT UN TEL CONTENEUR DE FRET ET PROCÉDÉ POUR ARRANGER DU FRET DANS UN ENSEMBLE CONTENEUR DE FRET

(30) Priority: 12.01.2021 NL 2027302
(43) Date of publication of application: 13.07.2022
(73) Proprietor: SII Netherlands B.V., 2032 EK Haarlem (NL); Elbe Flugzeugwerke GmbH, 01109 Dresden (DE)
(72) Inventor: Sulejmanovic, Bidin, 2032 EK Haarlem (NL); Prins, Daniël Johannes, 2032 EK Haarlem (NL)
(74) Representative: Arnold & Siedsma

(56) References cited:
- WO-A1-2012/041299
- US-A1- 2007 258 784
- US-A1- 2015 069 050
- US-A1- 2019 352 087
- US-B2- 8 794 480

## Description

The present invention relates to a method of stowing cargo in a cargo container assembly. The invention further relates to a cargo container and to a cargo container assembly, comprising such a cargo container and at least one complementary cargo container of a same or similar type.

In normal operations, products are transported from factories and warehouses to an airport, where these products are loaded into cargo stowage containers, also known as Unit Load Devices (ULDs). ULDs may fall under the (European) Technical Standards Order ((E)TSO) C90 requirements, which defines the use of said ULDs in a cargo compartment. Said ULDs are available in various types, but have standardized sizes, wherein the width and length are the most important, to allow them to be easily handled with a logistics system as e.g. present at modem airports and conventional cargo floor loading systems. These cargo stowage containers / ULDs are then loaded into a cargo compartment of an aircraft that flies the cargo towards a destination. At the destination, the cargo stowage containers are removed from the cargo compartment of the aircraft and unloaded, before the products are transported via trucks, trains and boats, to their final destination. This is a labour-intensive process that comprises multiple time consuming steps. There is an ongoing need to improve the logistics of such products.

International patent application WO 2012/041299 A1, which is considered as the closest prior art, discloses a ULD that is an assembly of sub-containers. The sub-containers may be loaded with cargo at different remote locations before being transported to an airfield. In a cargo terminal on the airfield, the sub-containers are assembled to form a loading unit for air cargo defining the ULD, which is successively loaded into an aircraft similar to a conventional ULD.

United States patent application US 2007/0258784 A1 discloses a cargo container assembly that comprises a main container and one or more than one extension container which can be attached to an upper portion of the main container. The extension container and the main container can be detached from each other and shipped as separate units that each meet height limitations.

United States patent US 8,794,480 B2 discloses a container assembly which corresponds to the size of a standardized sea cargo container, that is an assembly of a plurality of freight containers. The individual freight containers are transportable by plane and at the airfield, after unloading the freight containers from the plane, they may be coupled to form an assembly having a size suitable for transport on land or sea.

An objective of the present invention is to provide at least one of a method of stowing cargo, a cargo container and/or a cargo container assembly, that is improved relative to the prior art and wherein at least one of the above stated problems is obviated or alleviated.

Said objective is achieved with a cargo container according to claim 1, and with a method of stowing cargo in a cargo container assembly according to claim 9, said method comprising the steps of:
- filling a cargo container according to the invention and at least one complementary cargo container of a same or similar type with cargo;
- transporting the cargo container and the at least one complementary cargo container after the step of filling them with cargo, to an assembly location where the step of assembling the cargo container and the at least one complementary cargo container to mutually define the cargo container assembly is performed;
- assembling the cargo container and the at least one complementary cargo container to mutually define the cargo container assembly in an assembled state; and
- wherein the assembly location is inside an aircraft.

Contrary to the above-mentioned prior art and conventional ULDs, the method according to the present invention proposes to first bring the cargo container and the at least one complementary cargo container individually, and as a second step assemble them inside the aircraft to define the cargo container assembly. In this way, it is possible to stow cargo in a compartment of the aircraft that has entry passages, such as doors, that are large enough to allow the cargo container and the at least one complementary cargo container to pass individually, even if the cargo container assembly as such would not be able to pass through said entry passages.

According to a preferred embodiment, the assembly location is a passenger cabin of the aircraft. As will be explained in greater detail below, being able to stow and transport cargo in a passenger cabin greatly increases the versatility of aircraft use, and thereby increase the efficiency of aircraft use. It is noted here, that if cargo is transported in a passenger cabin that also comprises passengers, fire resistance and safety is of utmost importance. This is especially the case because passenger compartments are not designed with the same inherent fireproof features as conventional cargo departments (as present at a lower deck of a passenger plane) have.

According to a further preferred embodiment, the method further comprises the step of introducing the cargo container and the at least one complementary cargo container into the passenger compartment via a passenger door thereof.

According to an even further preferred embodiment, the step of filling the cargo container and the at least one complementary cargo container with cargo is performed at one or more than one remote loading location, and preferably at different remote loading locations.

According to an even further preferred embodiment, the method further comprises the steps of:
- transporting the cargo container assembly to a destination; and
- disassembling the cargo container assembly at the destination to obtain the cargo container and the at least one complementary cargo container disconnected from each other to thereby allow the cargo container and the at least one complementary cargo container to be transported to and unloaded at one or more than one remote unloading locations.

According to an even further preferred embodiment, the step of disassembling the cargo container assembly at the destination is performed inside the aircraft, and preferably inside the passenger cabin of the aircraft.

The above-mentioned objective is furthermore achieved with the cargo container according to claim 1 of the present invention, comprising at a periphery thereof, a coupling that is configured to be connected to at least one complementary cargo container of a same or similar type, to define, in an assembled state, a cargo container assembly, wherein:
- in the assembled state, the cargo container and the at least one complementary cargo container are connected with the coupling to mutually define the cargo container assembly;
- in a disassembled state, the cargo container is configured to store cargo and thereby allows said cargo container to be loaded and unloaded at a remote location that may be different from a location where the at least one complementary cargo container is loaded or unloaded;
- the cargo container comprises one or more than one connector side that is configured to face, in the assembled state, a complementary connector side of the at least one complementary cargo container to which it is connected; and
- wherein said connector side comprises a lightweight non-structural partition.

The connector side comprising a lightweight non-structural partition allows the cargo container assembly to be as light as possible, while also guaranteeing that cargo that has been loaded into the cargo container is safely confined within the cargo container during transport thereof as an individual unit.

By applying a lightweight non-structural partition, unnecessary weight is prevented, which is especially advantageous for air transport. Because the connector sides face inward the cargo container assembly in the assembled state, they do not have to fulfill any requirements regarding fire containment and rigidity. Instead, the non-structural partition provided by the connector sides is only required to enclose the products inside the cargo container or complementary cargo container when they are transported as an independent unit.

On the one hand, the non-structural partition allows the cargo container and the at least one complementary cargo container to be loaded independently at different remote locations, after which they may be transported to an airfield and - due to the cargo container and the at least one complementary cargo container still being separate unit - even into a passenger compartment of an aircraft. Once they are brought into the passenger compartment, the cargo container and the at least one complementary cargo container are coupled to define the cargo container assembly having structural (and preferably fire resistant) outer walls on all outer sides thereof, providing safe transport during flight.

On the other hand, the non-structural partitions of the cargo container and the at least one complementary cargo container will be facing each other when the cargo container and the at least one complementary cargo container are coupled to define the cargo container assembly. Consequently, the non-structural partitions do not have to be able to provide structural rigidity and/or fire resistance, allowing the non-structural partition to be lightweight, which provides a huge benefit during transport in general, but especially during air transport. In this way, a rigid (and preferably fire resistant) cargo container assembly during air transport is provided, while also allowing improved versatility by being able to independently load and unload the cargo container and the at least one complementary cargo container at different remote locations.

In the above-mentioned prior art documents WO 2012/041299 A1, US 2007/0258784 A1 and US 8,794,480 B2, the cargo container assemblies formed comprise adjacent structural walls. To the contrary, the present invention proposes a lightweight non-structural partition at the connector sides, resulting in a lightweight, yet safe, cargo container assembly. After all, said connector sides are facing inward the cargo container assembly, and therefore do not need to provide rigidity and/or fire resistance. In the most simple embodiment of a cargo container assembly being a combination of one cargo container and one complementary cargo container, two structural walls according to the prior art may be replace by one lightweight non-structural partition, that may even be substantially flexible and/or comprise a net or fabric layer. The skilled person will recognize that in more complex designs of cargo container assemblies comprising two or more than two complementary cargo containers, even greater weight savings may be obtained as a result of the greater number of connector sides.

The cargo container according to the invention also provides an improved versatility. After all, the cargo container according to the invention allows the cargo container and the at least one complementary cargo container of the same or similar type to be filled with cargo at one or more than one remote loading location before they are transported to an assembly location. As the cargo container and the at least one complementary cargo container are configured to be connected and mutually define the cargo container assembly, there is no need anymore to unload trucks and load conventional cargo stowage containers at the airport. Instead, the loading of the cargo container may be performed by the sender itself. However, because the cargo container and the at least one complementary cargo container mutually define the cargo container assembly in the assembled state, they may still be easily handled at the airport with conventional equipment, e.g. for loading them in a conventional way into a cargo compartment of the aircraft. After flying the cargo container assembly to a desired destination, the opposite procedure may be followed. The cargo container assembly may be removed from the cargo compartment, and disassembled to obtain the cargo container and the at least one complementary cargo container that are separate from each other, after which they may be transported with e.g. a truck, train or boat, to an unloading location, where the cargo may be unloaded from the cargo container by a receiving party.

In addition to the improved versatility in relation to the logistic process mentioned above, the container assembly being an assembly of the cargo container and the at least one complementary cargo container provides the opportunity to provide the cargo container and the at least one complementary cargo container with dimensions that allow them to be introduced one by one into a passenger cabin of the aircraft via a passenger door thereof. Thus, without requiring structural changes to the fuselage, such as making a larger door that would allow conventional cargo containers to pass, it is possible to securely load and transport cargo in a passenger compartment of an aircraft. The need for such kind of versatility became very clear when the world was unexpectedly confronted with the COVID-19 pandemic that struck the efficiency of passenger air transport. However, this type of versatility is not restricted to such extreme conditions. After all, also dependent on the popularity of certain destinations, passenger planes are not always fully booked and therefore partially empty, which significantly reduces the efficiency of these partly empty flights and thereby reduces the payload. In order to increase the efficiency of the airplane, it is desired that the available space therein is optimally used. If the passenger plane is not fully booked in terms of passengers and/or cargo, this has a negative effect on the efficiency of flying said plane, in extreme situations possibly leading to operational costs not being covered anymore.

A passenger plane is interpreted as an airplane configured to transport passengers, and also includes planes that are originally intended to (also) transport passengers but may temporarily only be used for transport of cargo. The passenger cabin is configured to be pressurized during flight. It is however remarked that said passenger cabin is, of course, not pressurized during loading or unloading the cargo container or the at least one complementary cargo container and/or during boarding or disembarking of passengers.

Using a cargo container assembly according to the invention, passenger planes may be temporarily used for transporting cargo only. Alternatively, by transporting additional cargo alongside the (fewer) passengers, efficiency can be improved, while also further advantageous effects are obtained. It is for example possible to use the cargo container assemblies for more securely predicting, and thus optimizing, a load distribution of the passenger plane. After all, whereas the body weight of passengers may vary and is an unknown parameter, the weight of the cargo is highly predictable and known beforehand, allowing optimal distribution of the weight over the plane. Moreover, the cargo container assemblies may provide barriers between groups of passengers distributed relative to each other inside the passenger cabin. In this way, a distance between different groups of passengers may be maintained in a natural way, reducing the risk of a virus to spread from one infected passenger of group to passengers of another group.

Summarizing, the cargo containers provide a more versatile logistic process, allowing the cargo containers to be loaded at a loading location by the sender and transported all the way to the receiving party, where the products may be unloaded from the cargo container at an unloading location. The loading location and the unloading location may be remote from the airport, and the container and the at least one complementary cargo container may even be (un)loaded at different remote (un)loading locations. Moreover, increased versatility is obtained by the cargo container assembly not only being suitable for transport in a cargo compartment of an aircraft, but also allowing it to be introduced into a passenger compartment via conventional passenger doors, when the cargo container and the at least one complementary cargo container are passed through said passenger door one by one, before being coupled to define the cargo container assembly inside the passenger cabin.

The invention further relates to a cargo container assembly, comprising a cargo container according to the invention, and at least one complementary cargo container of a same or similar type. Such a cargo container assembly may be considered a kit-of-parts, because the cargo container and the complementary cargo container of the same or similar type are parts of a kit, i.e. the cargo container assembly, that the end user assembles at the time of use.

In a preferred embodiment of the cargo container assembly, the cargo container assembly exhibits a length and a width, wherein the length is larger than the width and configured to extend on board transverse to a longitudinal direction of an aircraft, and the cargo container according and the at least one complementary cargo container divide the cargo container assembly in the width direction thereof to allow the cargo container and the at least one complementary cargo container to be passed through a regular passenger door.

Preferred embodiments are the subject of the dependent claims.

The various aspects and features described and shown in the specification can be applied, individually, wherever possible. These individual aspects, and in particular the aspects and features described in the attached dependent claims, may be an invention in its own right that is related to a different problem relative to the prior art.

In the following description preferred embodiments of the present invention are further elucidated with reference to the drawing, in which:
Figure 1 is a top view of an aircraft during the process of loading cargo containers into a passenger compartment;
Figure 2 is cross sectional view of the aircraft of Figure 1, showing cargo containers in a cargo compartment and in the passenger cabin;
Figure 3 is a perspective cross-sectional view showing how a cargo container is introduced via a passenger door into the passenger compartment;
Figure 4 is a perspective view of a cargo container assembly according to a first preferred embodiment;
Figure 5 is a perspective view of a cargo container and one complementary cargo container that may be assembled to form the cargo container assembly of Figure 4;
Figure 6 is a perspective view of a cargo container assembly according to a second preferred embodiment;
Figure 7 is a perspective view of a cargo container and two complementary cargo containers that may be assembled to form the cargo container assembly of Figure 6;

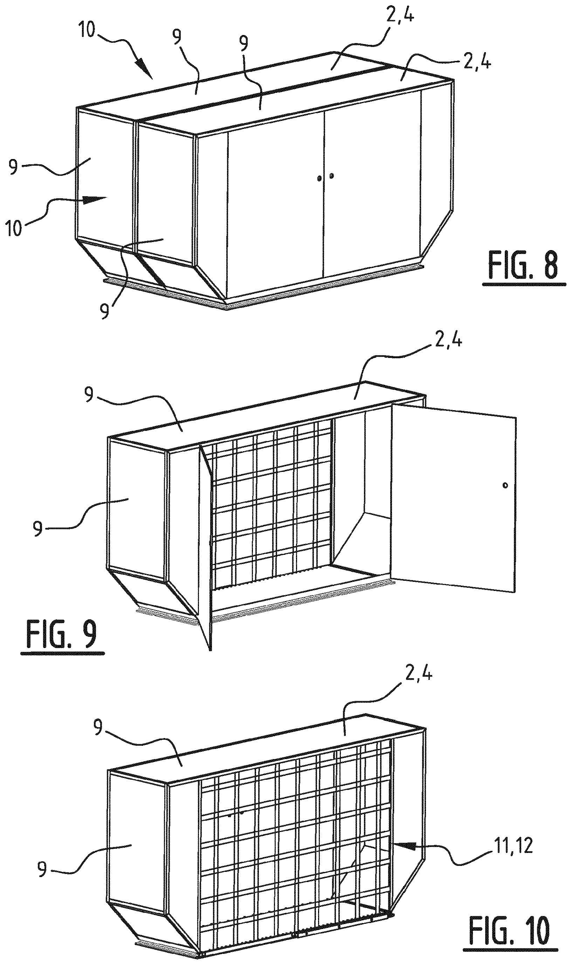

Figure 8 is a perspective view of a cargo container assembly according to a third preferred embodiment;
Figure 9 is a perspective view of a cargo container of the cargo container assembly of Figure 8;
Figure 10 is a perspective view of a complementary cargo container of the cargo container assembly of Figure 8;

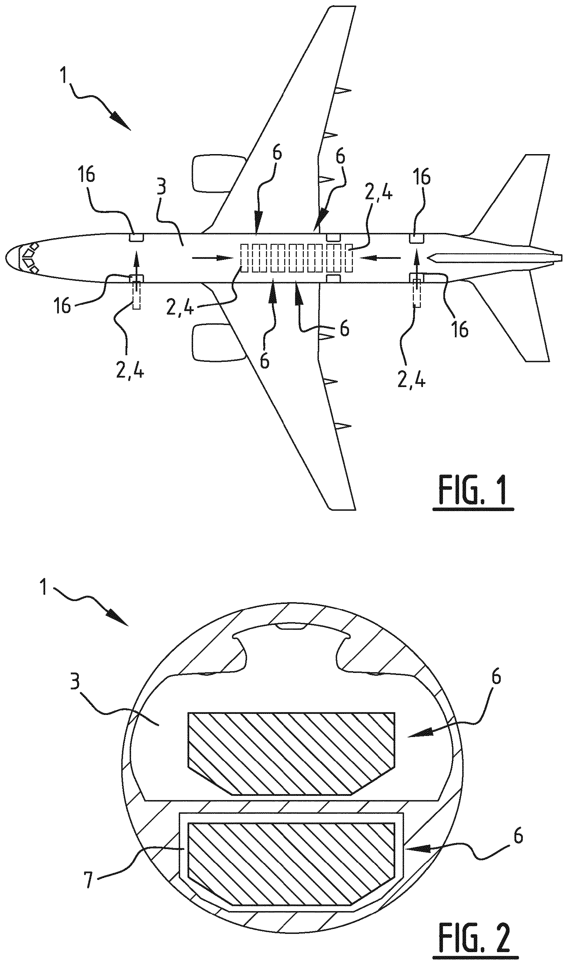

Figure 1 lis a perspective view showing how a cargo container and a complementary cargo container may be coupled;

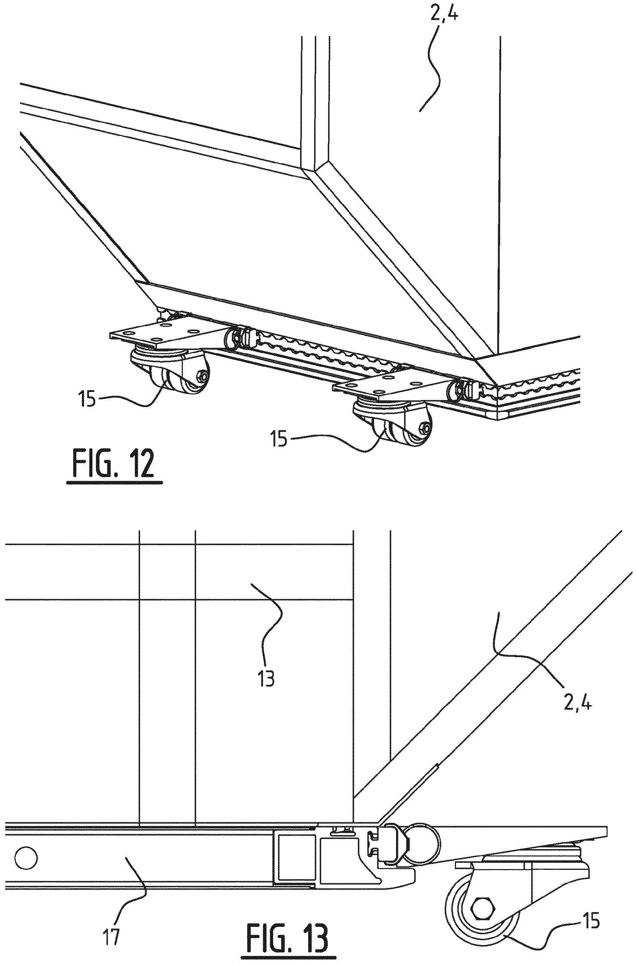

Figure 12 is a perspective view showing a cargo container comprising running wheels to improve handling;
Figure 13 is a cross-sectional perspective view of the cargo container of Figure 12; and

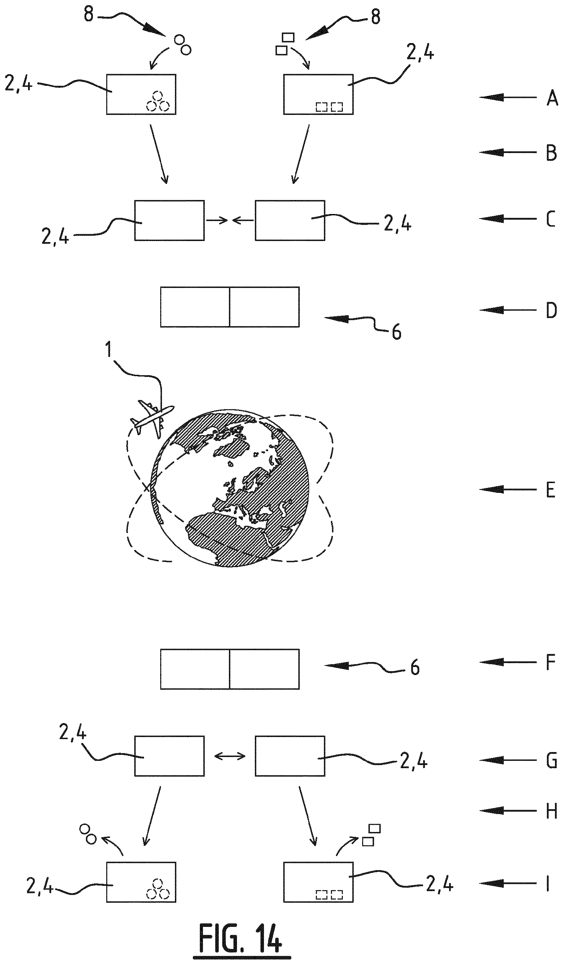

Figure 14 is a flow diagram illustrating the versatile logistic process that is possible with the invention.

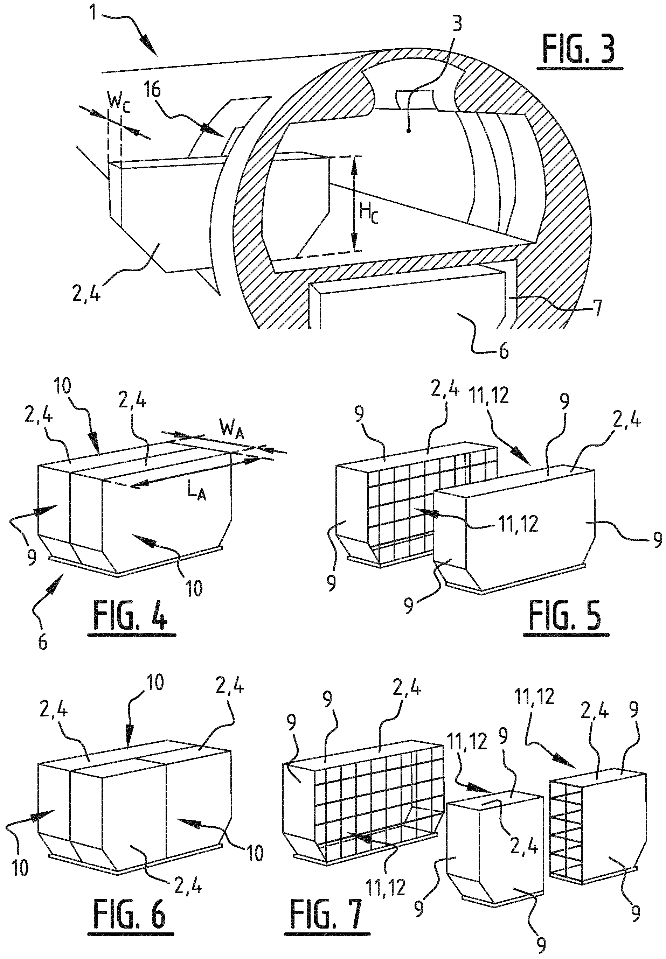

Figure 1 shows an aircraft 1 during the process of loading cargo containers 2 into a passenger compartment 3. These cargo containers 2 are configured to be connected to at least one complementary cargo container 4 of a same or similar type. Because the cargo container 2 and the complementary cargo container 4 may be of the same type, the combination of references 2, 4 is shown in most of the Figures. In the assembled state, the cargo container 2 and the at least one complementary cargo container 4 are connected with a coupling 5 to mutually define the cargo container assembly 6. The cargo container assemblies 6 are versatile in the sense that they may be transported both in the passenger compartment 3 and in the cargo compartment 7, as can be seen in the cross-sectional views of the aircraft in Figures 2 and 3.

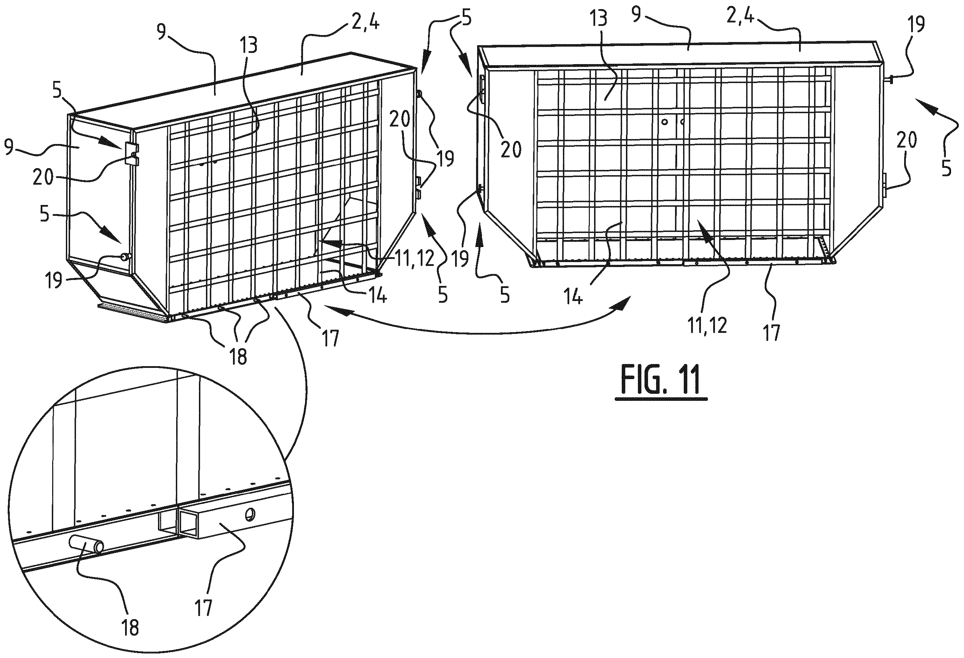

The cargo container 2 comprises at a periphery thereof, the coupling 5 (Figure 11) that is configured to be connected to at least one complementary cargo container 4 of the same or similar type, to define, in an assembled state, the cargo container assembly 6. In the assembled state, the cargo container 2 and the at least one complementary cargo container 4 are connected with the coupling 5 to mutually define the cargo container assembly 6. In a disassembled state, the cargo container 2 is configured to store cargo 8 and thereby allows said cargo container 2 to be loaded and unloaded at a remote location (Step A in Figure 14) that may be different from a location where the at least one complementary cargo container 4 is loaded or unloaded. Thus, in the disassembled state, each of the cargo container 2 and the at least one complementary cargo container 4 is independently configured to store cargo 8 and thereby allows the cargo container 2 and the at least one complementary cargo container 4 to be loaded and unloaded at different remote locations. Moreover, in the assembled state, the resulting cargo container assembly 6 may be handled with a conventional logistics system as e.g. present at modem airports and conventional cargo floor loading systems.

The cargo container 2 comprises outer sides 9 that, in the assembled state, define outer walls 10 of the cargo container assembly 6. These outer sides 9 are preferably rigid and structural walls to provide structural strength to the cargo container assembly 6. These outer sides 9 are moreover preferably fire resistant to define, in the assembled state, a fire contained cargo container assembly 6. In the context of this invention, fire resistant is defined as a fire resistance that is equal to or better than existing aircraft cargo compartments of Class C or Class F. The cargo container has to be able to contain a cargo fire until landing at the nearest airport after smoke of fire detection, in practice at least 120 min which is equal to the ETOPS (Extended-range Twin-engine Operational Performance Standards) time limitations. Fire-containment of the cargo container assembly 6 allows it to be safely used in a passenger compartment 3, possibly even alongside passengers.

The cargo container 2 comprises one or more than one connector side 11 that is configured to face, in the assembled state, a complementary connector side 12 of the at least one complementary cargo container 4 to which it is connected. Thus, in the assembled state, the connector sides 11, 12 define an interior partition layer of the cargo container assembly 6.

If the connector sides 11, 12 comprise a lightweight non-structural partition 13, unnecessary weight is prevented, which is especially advantageous for air transport. Because these connector sides 12 face inward the cargo container assembly 6 in the assembled state, they do not have to fulfill any requirements regarding fire containment and rigidity. Instead, the non-structural partition 13 provided by the connector sides 11, 12 is only required to enclose the products 8 inside the cargo container 2 or complementary cargo container 4 when they are transported as an independent unit, such as in Step B and Step H in Figure 14.

The non-structural partition 13 may be a rigid door. However, in a preferred embodiment, said non-structural partition 13 is substantially flexible, providing flexibility to the arrangement of cargo 8 inside the cargo container 2 and/or the complementary cargo container 4. The non-structural partition 13 preferably has a tensile strength similar to standard cargo netting materials used in aircraft. In this way, a flexible and substantially stretchless partition 13 is provided. In a more preferred embodiment said non-structural partition 13 comprises a (not shown) water resistant layer, for example a textile layer. To increase the strength and durability of the partition 13, it may comprise a net 14. The partition 13 serves to prevent cargo contained in the cargo container 2 and/or the complementary cargo container 4 from falling out during ground operation. On the one hand, the non-structural partition 13 allows the cargo container 2 and the at least one complementary cargo container 4 to be loaded independently at different remote locations, after which they may be transported to an airfield and - due to the cargo container 2 and the at least one complementary cargo container 4 still being separate unit - even into a passenger compartment 3 of an aircraft 1. Once they are brought into the passenger compartment 3, the cargo container 2 and the at least one complementary cargo container 4 are coupled to define the cargo container assembly 6 having structural (and preferably fire resistant) outer walls 10 on all outer sides thereof, providing safe transport during flight. On the other hand, the non-structural partitions 13 of the cargo container 2 and the at least one complementary cargo container 4 will be facing each other when the cargo container 2 and the at least one complementary cargo container 4 are coupled to define the cargo container assembly 6. Consequently, the non-structural partitions 13 do not have to be able to provide structural rigidity and/or fire resistance, allowing the non-structural partition 13 to be lightweight, which provides a huge benefit during transport in general, but especially during air transport. In this way, a rigid (and preferably fire resistant) cargo container assembly 6 during air transport is provided, while also allowing improved versatility by being able to independently load and unload the cargo container 2 and the at least one complementary cargo container 4 at different remote locations.

The cargo container 2 may have a width dimension W_{C} that is less than 1,2 m, preferably less than 1,1 m, and more preferably less than 1 m. Aircraft exist in many sizes, and consequently door sizes of passenger doors 16 and cargo doors of aircraft may also vary considerably. The cargo container assembly 6 according to the present invention is configured to have, in the assembled state, a standardized size of a Unit Load Device, "ULD", allowing the cargo container assembly 6 to be handled with conventional logistics system and conventional cargo floor loading systems. Aircraft suitable for receiving said Unit Load Devices (ULDs) are large aircraft, in particular aircraft falling into the CS-25 category of the European Union Aviation Safety Agency (EASA). Although various types of ULDs exist, they all have in common that they have a width (conform W_{A} in Figure 4) that allows them to be passed through a regular cargo door, but that at the same time prevents them to be passed through a regular passenger door 16 of such a CS-25 category aircraft. If the width dimension W_{C} of the cargo container 2 is less than 1,2 m, it fits through most passenger doors of CS-25 category aircraft. A smaller width dimension of W_{C} of 1,1 m or of 1 m may provide additional versatility and maneuverability, also guaranteeing that the cargo container 2 may fit through virtually all passenger doors of CS-25 category aircraft.

The cargo container 2 may furthermore have a height dimension H_{C} of less than 1,9 m, and it is preferably less than 1,85 m.

In order to improve handling of the cargo container 2, it may comprise one or more than one running wheel 15. Said running wheels 15 may be used if the aircraft 1 does not have a conventional cargo floor loading systems.

The cargo container assembly 6 exhibits a length L_{A} and a width W_{A}, wherein the length L_{A} is larger than the width W_{A} and configured to extend on board transverse to a longitudinal direction of the aircraft 1. The cargo container 2 and the at least one complementary cargo container 4 preferably divide the cargo container assembly 6 in the width direction thereof to allow the cargo container 2 and the at least one complementary cargo container 4 to be passed through a regular passenger door 16 (Figures 1 and 3).

As shown in Figure 11, the cargo container 2 and the at least one complementary cargo container 4 are of the same type and identical in shape, and define a form-fitting engagement along their length in the assembled state. This form-fitting engagement is guaranteed by a profile 17 extending over at most half of the length of the cargo container 2 and providing a stepped shape along the length, and one or more than one securing pin 18. This Figure 11 also shows the coupling 5 having male coupling parts 19 and female coupling parts 20.

In Figures 6 and 7, the cargo container assembly 6 comprises at least two complementary cargo containers 4 that are configured to be interconnected with each other, wherein said at least two complementary cargo containers 4 divide the cargo container assembly 6 in a length direction thereof.

As already mentioned above, the cargo container provides improved versatility. This is now further clarified with reference to the flow diagram in Figure 14. The cargo container 2 allows the cargo container 2 and the at least one complementary cargo container 4 of the same or similar type to be filled with cargo 8 at one or more than one remote loading location (Step A) before they are transported (Step B) to an assembly location. The assembly location may be at an airport, and may even be inside a passenger compartment 3 of an aircraft 1, as explained above. As the cargo container 2 and the at least one complementary cargo container 4 are configured to be connected (Step C) and mutually define the cargo container assembly 6 (Step D), there is no need anymore to unload trucks and load conventional cargo stowage containers at the airport. Instead, the loading of the cargo container 2 and/or the complementary cargo container 4 may be performed by the sender itself. However, because the cargo container 2 and the at least one complementary cargo container 4 mutually define the cargo container assembly 6 in the assembled state, they may still be easily handled at the airport with conventional equipment, e.g. for loading them in a conventional way into a cargo compartment 7 of the aircraft 1. After flying (Step E) the cargo container assembly 6 to a desired destination, the opposite procedure may be followed. The cargo container assembly may be removed from the passenger compartment 3 or from the cargo compartment 7 (Step F), and disassembled (Step G) to obtain the cargo container 2 and the at least one complementary cargo container 4 that are now again separate from each other, after which they may be transported (Step H) with e.g. a truck, train or boat, to an unloading location, where the cargo 8 may be unloaded (Step I) from the cargo container 2 by a receiving party.

The invention thus comprises a method of stowing cargo 8 in a cargo container assembly 6, comprising the steps of:
- filling a cargo container 2 and at least one complementary cargo container 4 of a same or similar type with cargo 8 (Step A); and
- assembling the cargo container 2 and the at least one complementary cargo container 4 (Step C) to mutually define the cargo container assembly 6 in an assembled state (Step D).

The step of assembling the cargo container 2 and the at least one complementary cargo container 4 (Step C) comprises connecting the cargo container 2 and the at least one complementary cargo container 4 with the coupling 5 arranged at the periphery of at least the cargo container 2.

The step of filling the cargo container 2 and the at least one complementary cargo container 4 with cargo 8 (Step A) may be performed at one or more than one remote loading location, and in particular at different remote loading locations.

Step B shows the step of transporting the cargo container 2 and the at least one complementary cargo container 4 to an assembly location where Step C, i.e. the step of assembling the cargo container and the at least one complementary cargo container to mutually define the cargo container assembly, is performed. This assembly location may be inside an aircraft 1, and may more particular be a passenger cabin 3 of the aircraft 1. In advance, the method may comprise step of introducing the cargo container 2 and the at least one complementary cargo container 4 into the passenger compartment 3 via a passenger door 16 thereof.

The method may further comprise the steps of transporting the cargo container assembly 6 to a destination (Step E), and disassembling the cargo container assembly 6 at the destination (Step G) to obtain the cargo container w and the at least one complementary cargo container 4 disconnected from each other to thereby allow the cargo container 2 and the at least one complementary cargo container 4 to be transported (Step H) to and unloaded (Step I) at one or more than one remote unloading locations.

The step G of disassembling the cargo container assembly 6 at the destination may be performed inside the aircraft 1, and more in particular inside the passenger cabin 3 of the aircraft 1. In this way, the cargo container assembly 6 is divided into smaller components, i.e. in a cargo container 2 and at least one complementary cargo container 4. The cargo container 2 and the at least one complementary cargo container 4 are preferably sized such that they fit through a conventional passenger door 16 of a passenger compartment 3 of the aircraft 1, allowing the cargo container 2 and the at least one complementary cargo container 4 to be removed from the passenger compartment 3 after disassembly of the cargo container assembly 6.

The above-described embodiment is intended only to illustrate the invention and not to limit in any way the scope of the invention. For example, although the contoured cargo containers are shown, the invention is likewise applicable to rectangular containers. It should be understood that where features mentioned in the appended claims are followed by reference signs, such signs are included solely for the purpose of enhancing the intelligibility of the claims and are in no way limiting on the scope of the claims. The scope of protection is defined solely by the following claims.

## Claims

1. Cargo container (2), comprising at a periphery thereof, a coupling (5) that is configured to be connected to at least one complementary cargo container (4) of a same or similar type, to define, in an assembled state, a cargo container assembly (6), wherein:
- in the assembled state, the cargo container (2) and the at least one complementary cargo container (4) are connected with the coupling (5) to mutually define the cargo container assembly (6); and
- in a disassembled state, the cargo container (2) is configured to store cargo and thereby allows said cargo container (2) to be loaded and unloaded at a remote location that may be different from a location where the at least one complementary cargo container (4) is loaded or unloaded;
- the cargo container (2) comprises one or more than one connector side (11) that is configured to face, in the assembled state, a complementary connector side (12) of the at least one complementary cargo container (4) to which it is connected,
**characterized in that** said connector side (11) comprises a lightweight non-structural partition (13).

2. Cargo container according to claim 1, wherein said non-structural partition (13) is substantially flexible; and said non-structural partition preferably comprises a net (14) or a water-resistant layer.

3. Cargo container according to claim 1 or 2, comprising outer sides that, in the assembled state, define outer walls (10) of the cargo container assembly (6).

4. Cargo container according to claim 3, wherein said outer sides are rigid and structural walls (10), and preferably at least one of:
- said outer sides are fire resistant to define, in the assembled state, a fire contained cargo container assembly (6); and
- a width dimension of the cargo container (2) is less than 1.2 m, preferably less than 1.1 m, and more preferably less than 1 m.

5. Cargo container according to one or more than one of the foregoing claims, wherein a height dimension of the cargo container (2) is less than 1.9 m, and is preferably less than 1.85 m.

6. Cargo container assembly, comprising a cargo container (2) according to one or more than one of the foregoing claims and at least one complementary cargo container (4) of a same or similar type.

7. Cargo container assembly according to claim 6, wherein:
- the cargo container assembly (6) exhibits a length (L_{A}) and a width (W_{A}),
wherein the length (L_{A}) is larger than the width (W_{A}) and configured to extend on board transverse to a longitudinal direction of an aircraft (1); and
- the cargo container (2) and the at least one complementary cargo container (4) divide the cargo container assembly (6) in the width direction thereof to allow the cargo container (2) and the at least one complementary cargo container (4) to be passed through a regular passenger door (16); and
- preferably at least one of:
- the cargo container (2) and the at least one complementary cargo container (4) are of the same type and identical in shape, and define a form-fitting engagement along their length in the assembled state; and
- the cargo container assembly (6) comprises at least two complementary cargo containers (4) that are configured to be interconnected with each other, wherein said at least two complementary cargo containers (4) divide the cargo container assembly (6) in a length direction thereof.

8. Cargo container assembly according to claim 6 or 7, in the assembled state having a standardized size of a Unit Load Device, "ULD".

9. Method of stowing cargo in a cargo container assembly, comprising the steps of:
- filling a cargo container (2) according to any of claims 1-8 and at least one complementary cargo container (4) of a same or similar type with cargo;
- transporting the cargo container (2) and the at least one complementary cargo container (6) after the step of filling them with cargo, to an assembly location where the step of assembling the cargo container (2) and the at least one complementary cargo container (4) to mutually define the cargo container assembly (6) is performed, and
- assembling the cargo container (2) and the at least one complementary cargo container (4) to mutually define the cargo container assembly (6) in an assembled state;
**characterized in that** the assembly location is inside an aircraft (1).

10. Method according to claim 9, wherein the assembly location is a passenger cabin (3) of the aircraft (1).

11. Method according to claim 10, further comprising the step of introducing the cargo container (2) and the at least one complementary cargo container (4) into the passenger compartment (3) via a passenger door (16) thereof.

12. Method according to one or more than one of claims 9-11, wherein the step of assembling the cargo container (2) and the at least one complementary cargo container (4) comprises connecting the cargo container (2) and the at least one complementary cargo container (4) with a coupling (5) arranged at a periphery of the cargo container (2).

13. Method according to one or more than one of claims 9-12, wherein the step of filling the cargo container (2) and the at least one complementary cargo container (4) with cargo is performed at one or more than one remote loading location, and preferably at different remote loading locations.

14. Method according to one or more than one of claims 9-13, further comprising the steps of:
- transporting the cargo container assembly (6) to a destination; and
- disassembling the cargo container assembly (6) at the destination to obtain the cargo container (2) and the at least one complementary cargo container (4) disconnected from each other to thereby allow the cargo container (2) and the at least one complementary cargo container (6) to be transported to and unloaded at one or more than one remote unloading locations.

15. Method according to claim 14, wherein the step of disassembling the cargo container assembly (6) at the destination is performed inside the aircraft (1), and preferably inside the passenger cabin (3) of the aircraft (1).

## Patentansprüche

1. Frachtcontainer (2), der an seiner Außenfläche eine Kupplung (5) aufweist, die so ausgebildet ist, dass sie mit zumindest einem komplementären Frachtcontainer (4) desselben oder ähnlichen Typs verbunden werden kann, um in einem gekoppelten Zustand eine Frachtcontainer-Anordnung (6) zu bilden, wobei:
- in dem gekoppelten Zustand der Frachtcontainer (2) und der zumindest eine komplementäre Frachtcontainer (4) über die Kupplung (5) verbunden sind, um gemeinsam die Frachtcontainer-Anordnung (6) zu bilden; und
- der Frachtcontainer (2) in einem entkoppelten Zustand so ausgebildet ist, dass er Fracht aufnehmen kann und es dadurch möglich ist, den Frachtcontainer (2) an einem entfernten Ort zu be- und entladen, wobei sich dieser Ort von einem Ort, an dem der zumindest eine komplementäre Frachtcontainer (4) be- oder entladen wird, unterscheiden kann;
- der Frachtcontainer (2) eine oder mehr als eine Verbindungsseite (11) aufweist, die so ausgebildet ist, dass sie im gekoppelten Zustand einer komplementären Verbindungsseite (12) des zumindest einen komplementären Frachtcontainers (4), mit dem er verbunden ist, gegenüberliegt,
**dadurch gekennzeichnet, dass** die Verbindungsseite (11) eine leichte, nicht-strukturelle Trennwand (13) aufweist.

2. Frachtcontainer nach Anspruch 1, wobei die nicht-strukturelle Trennwand (13) im Wesentlichen flexibel ist und vorzugsweise ein Netz (14) oder eine wasserabweisende Schicht aufweist.

3. Frachtcontainer nach Anspruch 1 oder 2, mit Außenseiten, die im gekoppelten Zustand Außenwände (10) der Frachtcontainer-Anordnung (6) bilden.

4. Frachtcontainer nach Anspruch 3, wobei die Außenseiten starre und strukturelle Wände (10) darstellen, wobei vorzugsweise
- die Außenseiten feuerbeständig sind, um im gekoppelten Zustand eine feuerfeste Frachtcontainer-Anordnung (6) zu bilden; und/oder
- eine Breitenabmessung des Frachtcontainers (2) weniger als 1,2 m, vorzugsweise weniger als 1,1 m, und noch bevorzugter weniger als 1 m beträgt.

5. Frachtcontainer nach einem oder mehreren der vorherigen Ansprüche, wobei eine Höhenabmessung des Frachtcontainers (2) weniger als 1,9 m und vorzugsweise weniger als 1,85 m beträgt.

6. Frachtcontainer-Anordnung, bestehend aus einem Frachtcontainer (2) nach einem oder mehreren der vorherigen Ansprüche und zumindest einem komplementären Frachtcontainer (4) gleichen oder ähnlichen Typs.

7. Frachtcontainer-Anordnung nach Anspruch 6, wobei:
- die Frachtcontainer-Anordnung (6) eine Länge (LA) und eine Breite (WA) aufweist, wobei die Länge (LA) größer ist als die Breite (WA), und so gestaltet ist, dass sie sich an Bord quer zu einer Längsrichtung eines Flugzeugs (1) erstreckt; und
- der Frachtcontainer (2) und der zumindest eine komplementäre Frachtcontainer (4) die Frachtcontainer-Anordnung (6) in ihrer Breitenrichtung unterteilen, um zu ermöglichen, dass der Frachtcontainer (2) und der zumindest eine komplementäre Frachtcontainer (4) durch eine reguläre Passagiertüre (16) hindurchgeführt werden können; und
wobei vorzugsweise
- der Frachtcontainer (2) und der zumindest eine komplementäre Frachtcontainer (4) vom gleichen Typ und in ihrer Form identisch sind, und im gekoppelten Zustand entlang ihrer Länge einen formschlüssigen Eingriff bilden; und/oder
- die Frachtcontainer-Anordnung (6) zumindest zwei komplementäre Frachtcontainer (4) aufweist, die so ausgebildet sind, dass sie miteinander verbunden werden können, wobei die zumindest zwei komplementären Frachtcontainer (4) die Frachtcontainer-Anordnung (6) in ihrer Längsrichtung unterteilen.

8. Frachtcontainer-Anordnung nach Anspruch 6 oder 7, die im gekoppelten Zustand eine genormte Größe eines Unit Load Device, "ULD", aufweist.

9. Verfahren zum Verstauen von Fracht in einer Frachtcontainer-Anordnung, aufweisend die folgenden Schritte:
- Befüllen eines Frachtcontainers (2) nach einem der Ansprüche 1 bis 8 sowie zumindest eines komplementären Frachtcontainers (4) desselben oder ähnlichen Typs mit Fracht;
- Transportieren des Frachtcontainers (2) und des zumindest einen komplementären Frachtcontainers (6), nach dem Schritt des Befüllens mit Fracht, zu einem Montageort, wo der Schritt des Koppelns des Frachtcontainers (2) mit dem zumindest einen komplementären Frachtcontainer (4) zum gemeinsamen Bilden der Frachtcontainer-Anordnung (6) erfolgt, und
- Koppeln des Frachtcontainers (2) mit dem zumindest einen komplementären Frachtcontainer (4), um in einem gekoppelten Zustand gemeinsam die Frachtcontainer-Anordnung (6) zu bilden;
**dadurch gekennzeichnet, dass** sich der Montageort innerhalb eines Flugzeugs (1) befindet.

10. Verfahren nach Anspruch 9, wobei der Montageort eine Passagierkabine (3) des Flugzeugs (1) darstellt.

11. Verfahren nach Anspruch 10, ferner aufweisend den Schritt des Einbringens des Frachtcontainers (2) und des zumindest einen komplementären Frachtcontainers (4) in den Passagierraum (3) über eine Passagiertüre (16) desselben.

12. Verfahren nach einem oder mehreren der Ansprüche 9 bis 11, wobei der Schritt des Koppelns des Frachtcontainers (2) mit dem zumindest einen komplementären Frachtcontainer (4) das Verbinden des Frachtcontainers (2) und des zumindest einen komplementären Frachtcontainers (4) mittels einer an einer Außenfläche des Frachtcontainers (2) angeordneten Kupplung (5) umfasst.

13. Verfahren nach einem oder mehreren der Ansprüche 9 bis 12, wobei der Schritt des Befüllens des Frachtcontainers (2) und des zumindest einen komplementären Frachtcontainers (4) mit Fracht an einem oder mehreren entfernten Beladeorten und vorzugsweise an verschiedenen entfernten Beladeorten erfolgt.

14. Verfahren nach einem oder mehreren der Ansprüche 9 bis 13, ferner aufweisend die folgenden Schritte:
- Transportieren der Frachtcontainer-Anordnung (6) zu einem Bestimmungsort; und
- Entkoppeln der Frachtcontainer-Anordnung (6) an dem Bestimmungsort, um den Frachtcontainer (2) und den zumindest einen komplementären Frachtcontainer (4) voneinander zu trennen, damit der Frachtcontainer (2) und der zumindest eine komplementäre Frachtcontainer (6) zu einem oder mehreren entfernten Entladeorten transportiert und dort entladen werden können.

15. Verfahren nach Anspruch 14, wobei der Schritt des Entkoppelns der Frachtcontainer-Anordnung (6) am Bestimmungsort innerhalb des Flugzeugs (1) und vorzugsweise innerhalb der Passagierkabine (3) des Flugzeugs (1) erfolgt.

## Revendications

1. Conteneur de fret (2), comprenant à une périphérie de celui-ci, un élément de couplage (5) qui est configuré pour être connecté à au moins un conteneur de fret complémentaire (4) d'un type identique ou similaire, pour définir, à l'état assemblé, un ensemble conteneur de fret (6), dans lequel :
- à l'état assemblé, le conteneur de fret (2) et l'au moins un conteneur de fret complémentaire (4) sont connectés à l'élément de couplage (5) pour définir mutuellement l'ensemble conteneur de fret (6) ; et
- dans un état désassemblé, le conteneur de fret (2) est configuré pour stocker du fret et permet ainsi audit conteneur de fret (2) d'être chargé et déchargé à un emplacement distant qui peut être différent d'un emplacement où l'au moins un conteneur de fret complémentaire (4) est chargé ou déchargé ;
- le conteneur de fret (2) comprend un ou plus d'un côté de connecteur (11) qui est configuré pour faire face, à l'état assemblé, à un côté de connecteur complémentaire (12) de l'au moins un conteneur de fret complémentaire (4) auquel il est connecté,
**caractérisé en ce que** ledit côté connecteur (11) comprend une cloison non structurelle légère (13).

2. Conteneur de fret selon la revendication 1, dans lequel ladite cloison non structurelle (13) est sensiblement flexible ; et ladite cloison non structurelle comprend de préférence un filet (14) ou une couche résistant à l'eau.

3. Conteneur de fret selon la revendication 1 ou 2, comprenant des côtés externes qui, à l'état assemblé, définissent des parois externes (10) de l'ensemble conteneur de fret (6).

4. Conteneur de fret selon la revendication 3, dans lequel lesdits côtés externes sont des parois rigides et structurelles (10), et de préférence :
- lesdits côtés externes qui sont résistants au feu pour définir, à l'état assemblé, un ensemble conteneur de fret à confinement de feu (6) ; et/ou
- une dimension de largeur du conteneur de fret (2) est inférieure à 1,2 m, de préférence inférieure à 1,1 m, et de manière davantage préférée inférieure à 1 m.

5. Conteneur de fret selon une ou plusieurs des revendications précédentes, dans lequel une dimension de hauteur du conteneur de fret (2) est inférieure à 1,9 m, et est de préférence inférieure à 1,85 m.

6. Ensemble conteneur de fret, comprenant un conteneur de fret (2) selon une ou plusieurs des revendications précédentes et au moins un conteneur de fret complémentaire (4) d'un type identique ou similaire.

7. Ensemble conteneur de fret selon la revendication 6, dans lequel :
- l'ensemble conteneur de fret (6) présente une longueur (L_{A}) et une largeur (W_{A}), dans lequel la longueur (L_{A}) est supérieure à la largeur (W_{A}) et configurée pour s'étendre à bord transversalement à une direction longitudinale d'un aéronef (1) ; et
- le conteneur de fret (2) et l'au moins un conteneur de fret complémentaire (4) divisent l'ensemble conteneur de fret (6) dans la direction de la largeur de celui-ci pour permettre au conteneur de fret (2) et à l' au moins un conteneur de fret complémentaire (4) de passer à travers une porte passagers ordinaire (16) ; et - de préférence au moins l'un parmi :
-- le conteneur de fret (2) et l' au moins un conteneur de fret complémentaire (4) sont du même type et de forme identique, et définissent une mise en prise par ajustement de forme sur leur longueur à l'état assemblé ; et
-- l'ensemble conteneur de fret (6) comprend au moins deux conteneurs de fret complémentaires (4) qui sont configurés pour être interconnectés l'un avec l'autre, dans lequel lesdits au moins deux conteneurs de fret complémentaires (4) divisent l'ensemble conteneur de fret (6) dans la direction de la longueur de celui-ci.

8. Ensemble conteneur de fret selon la revendication 6 ou 7, ayant, à l'état assemblé, une taille normalisée d'une unité de chargement « UC ».

9. Procédé de rangement de fret dans un ensemble conteneur de fret, comprenant les étapes de :
- remplissage d'un conteneur de fret (2) selon l'une quelconque des revendications 1 à 8 et d'au moins un conteneur de fret complémentaire (4) d'un type identique ou similaire en fret,
- transport du conteneur de fret (2) et de l'au moins un conteneur de fret complémentaire (6) après l'étape de leur remplissage en fret, vers un emplacement d'assemblage où l'étape d'assemblage du conteneur de fret (2) et de l'au moins un conteneur de fret complémentaire (4) pour définir mutuellement l'ensemble conteneur de fret (6) est effectuée, et
- assemblage du conteneur de fret (2) et de l' au moins un conteneur de fret complémentaire (4) pour définir mutuellement l'ensemble conteneur de fret (6) en un état assemblé ;
**caractérisé en ce que** l'emplacement d'assemblage est à l'intérieur d'un aéronef (1).

10. Procédé selon la revendication 9, dans lequel l'emplacement d'assemblage est une cabine passagers (3) de l'aéronef (1).

11. Procédé selon la revendication 10, comprenant en outre l'étape d'introduction du conteneur de fret (2) et de l'au moins un conteneur de fret complémentaire (4) dans l'habitacle (3) via une porte passagers (16) de celui-ci.

12. Procédé selon une ou plusieurs des revendications 9 à 11, dans lequel l'étape d'assemblage du conteneur de fret (2) et de l'au moins un conteneur de fret complémentaire (4) comprend la connexion du conteneur de fret (2) et de l'au moins un conteneur de fret complémentaire (4) avec un élément de couplage (5) agencé à une périphérie du conteneur de fret (2).

13. Procédé selon une ou plusieurs des revendications 9 à 12, dans lequel l'étape de remplissage du conteneur de fret (2) et de l'au moins un conteneur de fret complémentaire (4) en fret est effectuée à un ou plus d'un emplacement de chargement distant, et de préférence à différents emplacements de chargement distant.

14. Procédé selon une ou plusieurs des revendications 9 à 13, comprenant en outre les étapes de :
- transport de l'ensemble conteneur de fret (6) à une destination ; et
- désassemblage de l'ensemble conteneur de fret (6) au niveau de la destination pour obtenir le conteneur de fret (2) et l'au moins un conteneur de fret complémentaire (4) déconnectés l'un de l'autre pour permettre ainsi au conteneur de fret (2) et à l'au moins un conteneur de fret complémentaire (6) d'être transportés à et déchargés au niveau d'un ou de plusieurs emplacements de déchargement distants.

15. Procédé selon la revendication 14, dans lequel l'étape de désassemblage de l'ensemble conteneur de fret (6) au niveau de la destination est effectuée à l'intérieur de l'aéronef (1), et de préférence à l'intérieur de la cabine passagers (3) de l'aéronef (1).
